# EUROPEAN PATENT APPLICATION

(11) **EP 1 624 164 A1**
(43) Date of publication of application: **08.02.2006**
(21) Application number: 05016676.8
(22) Date of filing: 01.08.2005
(51) Int. Cl.: F01N 3/035, B01D 53/94

(54) **Exhaust gas purification filter for diesel internal combustion engine and method for manufacturing the same and exhaust gas purification apparatus**

(30) Priority: 05.08.2004 JP 2004229134
(71) Applicant: Hitachi, Ltd., Tokyo 100-8280 (JP)
(72) Inventor: Watanabe, Hiroko, 1-chome, Chiyoda-ku, Tokyo 100-8220 (JP); Kuroda, Osamu, 1-chome, Chiyoda-ku, Tokyo 100-8220 (JP); Kitahara, Yuichi, 1-chome, Chiyoda-ku, Tokyo 100-8220 (JP); Inoue, Takeshi, Hitachinaka-shi, Ibaraki 312-0062 (JP); Shinotsuka, Norihiro, 1-chome, Chiyoda-ku, Tokyo 100-8220 (JP); Iizuka, Hidehiro, 1-chome, Chiyoda-ku, Tokyo 100-8220 (JP)
(74) Representative: Beetz & Partner

(57) **Abstract**

The invention relates to an exhaust gas purification filter (10) for a diesel internal combustion engine. In this filter (10), catalyst layers are not formed at portions to which a sealant (6) of the filter (10) is stuck so that a substrate of the honeycomb structure (1) is exposed, but formed at portions to which a substrate of the honeycomb structure (1) is exposed. If the sealant (6) is stuck to catalyst layer portions, because the catalyst layers are brittle and the surfaces thereof have asperities, the fixing strength of the sealant (6) is reduced, so that the sealing portions becomes prone to falling-off under shocks or the like. By exposing the substrate of the honeycomb structure (1) and sticking the sealant (6) to the exposed portions, it is possible to enhance the fixing strength of the sealant (6) and thereby to prevent the sealing portions from falling off.

## Description

### BACKGROUND OF THE INVENTION

### 1. Field of the Invention

The present invention relates to an exhaust gas purification filter for collecting particulate matter (PM) contained in exhaust gas from a diesel internal combustion engine, a method for manufacturing the same, and an exhaust gas purification apparatus.

### 2. Description of the Related Art

One task associated with internal combustion engines is to prevent air pollution with particulate matter contained in exhaust gas. As countermeasure to prevent air pollution with particulate matter, a variety of filters has been developed. Among them, there is a type of filter in which a catalyst layer is provided on each cell side-wall in a filter comprising a honeycomb structure, and both sides of the cell openings are alternately sealed (see, for example, JP-A-9-173866: Paragraph [0004]). This type of filter is configured to pass exhaust gas through pores in cell side-walls to allow it flow to adjacent cells, thereby collecting particulates contained in exhaust gas on the cell side-walls. This filter is also arranged to burn and eliminate the particulates collected on the cell side-walls by a platinum group element included in the catalyst layers.

### SUMMARY OF THE INVENTION

Regarding such a filter in which both ends of cell openings of a honeycomb structure are alternately sealed and in which a catalyst layer is provided on each of the cell side-walls, the primary aim of its development has hitherto been to improve the adhesion strength of the catalyst layers to prevent their peeling. The present inventors look at the situation from a different angle, and focus attention on sealing portion issue. The inventors have recognized that the filter of the above-described structure involves a problem in that it is difficult to seal or that the sealing portions thereof tend to fall off.

The object of the present invention is to solve the problems associated with the sealing portions. Specifically, the object of the present invention is to provide a manufacturing method for manufacturing a filter of which sealing portions are resistant to peeling or a filter facilitating sealing, and a diesel internal combustion engine exhaust gas purification apparatus having a filter of which sealing portions are resistant to peeling or a filter facilitating sealing.

The present invention provides a honeycomb structure filter including no catalyst layer region. In the no catalyst layer region, the substrate of the honeycomb structure is exposed in the visinity of end portion of the cell opening. Furthermore, the sealing is performed to the no catalyst layer region.

The present invention provides an exhaust gas purification filter for a diesel internal combustion engine. This filter includes a honeycomb structure having a large number of cells with both ends thereof opened, the openings of the cells being alternately sealed so as to allow exhaust gas to pass through side-walls of the cells and flow into adjacent cells; and/or a catalyst layer provided on each of the cell side-walls. Herein, sealing of the cell openings is performed to portions to which a substrate of the honeycomb structure is exposed.

The present invention provides a method for manufacturing an exhaust gas purification filter for a diesel internal combustion engine. This method includes the steps of: alternately sealing both ends of cell openings in a honeycomb structure having a large number of cells with both ends thereof opened; forming a catalyst layer on each of the cell side-walls; in the vicinity of end portions of the cell openings, forming regions in which a substrate of the honeycomb structure is exposed, without forming any catalyst layer thereon; and/or applying sealing to the above-described regions.

The present invention provides an exhaust gas purification apparatus for a diesel internal combustion engine. This apparatus includes a filter installed in an exhaust gas flow path of a diesel internal combustion engine, the filter including honeycomb structure having a large number of cells with both ends thereof opened, the openings of the cells being alternately sealed; and/or a catalyst layer provided on each of the cell side-walls. Herein, sealing of the cell openings of the filter is performed to portions to which a substrate of the honeycomb structure is exposed.

The filter according to the present invention applies sealing to regions to which the substrate of the honeycomb structure is exposed, without forming any catalyst layer thereon, so that the fixing strength of sealing portions thereof is strong, thereby producing an effect of preventing the sealing portions from falling off.

### BRIEF DESCRIPTION OF THE DRAWINGS

Figs. 1A to 1E are process views showing a filter manufacturing method according to a first embodiment of the present invention;
Fig. 2 is a schematic view showing a jig for mask according to the first embodiment of the present invention, wherein Fig. 2 shows a plan view and front view;
Figs. 3A to 3D are process views showing a filter manufacturing method according to a second embodiment of the present invention;
Fig. 4 is an enlarged schematic view of cell walls with catalyst layers formed thereon;
Fig. 5 is a schematic view showing a lid serving as a sealant, wherein Fig. 5 shows a plan view and front view;
Fig. 6 is a schematic view showing another example of lid, wherein Fig. 6 shows a plan view and front view;
Fig. 7 is a schematic view of the filter on which the lids shown in Figs. 6A and 6B are mounted;
Fig. 8 is a schematic view showing still another example of a lid, wherein Fig. 8 shows a plan view and front view;
Fig. 9 is a schematic view showing an example in which a filter is installed in an exhaust gas flow path;
Fig. 10 is a schematic view showing another example in which a filter is installed in the exhaust gas flow path;
Figs. 11A to 11H are process views showing a filter manufacturing method according to a third embodiment of the present invention; and
Fig. 12 is a schematic view of an exhaust gas purification apparatus according to the third embodiment of the present invention.

### DESCRIPTION OF THE PREFERRED EMBODIMENTS

Possible methods for sealing the cell openings may include a method in which sealing is performed after catalyst layers have been formed, and a method in which sealing is performed before catalyst layers are formed. In the case where a catalyzation treatment is made, as is usually performed with respect to filters, by a method in which cell side-walls are directly coated with catalyst powder, or by a method in which, after the cell-side walls have been coated with a support such as alumina, a catalyst is supported on the support, it is actually difficult to form catalyst layers after sealing has been conducted. For example, because cell flow paths are blind alleys, it is difficult to apply coating at a fixed thickness. Also, because air blowing into cells cannot be easily performed, the desiccation of the cells after having been coated with catalyst layers, takes a long time.

On the other hand, the method in which sealing is performed after the catalyzation treatment has been performed, involves the following problems. When attempting to pour a sealant in a slurry state into the cell openings, it is difficult to pour the sealant because the cell openings have got narrow owing to catalyst layers. Also, unless a material capable of undergoing a hardening treatment at a temperature lower than the thermal degradation temperature is used as a sealant material, the catalyst layers would be thermally degraded, resulting in a reduced catalyst activity. When a solid sealant is press-fitted into the cell openings, there is a risk that the catalyst layers peel and fall out owing to a pushing-in pressure during the press-fitting. Also, because each of the catalyst layers has a large number of asperities on the surface thereof, it is difficult to stick the press-fitted sealant and the catalyst layer to each other, or to bring them into pressure contact with each other. Furthermore, when lids allowing both ends of the cell openings to be alternately sealed are abutted against the end faces of the honeycomb structure to fix or stick them to the end faces, if a catalyst exists on the end faces, the asperities thereof make it difficult to bring the lids into intimate contact with the end faces, thus raising a problem that the fixation or adhesion between the lids and the end faces of the honeycomb structure is difficult. Another problem is that, when particulates having been stuck to the sealing portions are burnt, and the sealant is heated up to a high temperature, the catalyst layers are subjected to thermal degradation by the heat to thereby become susceptible to peeling, provided the sealant and catalyst layers are mutually stuck. The present invention can overcome the above-described problems.

### First Embodiment

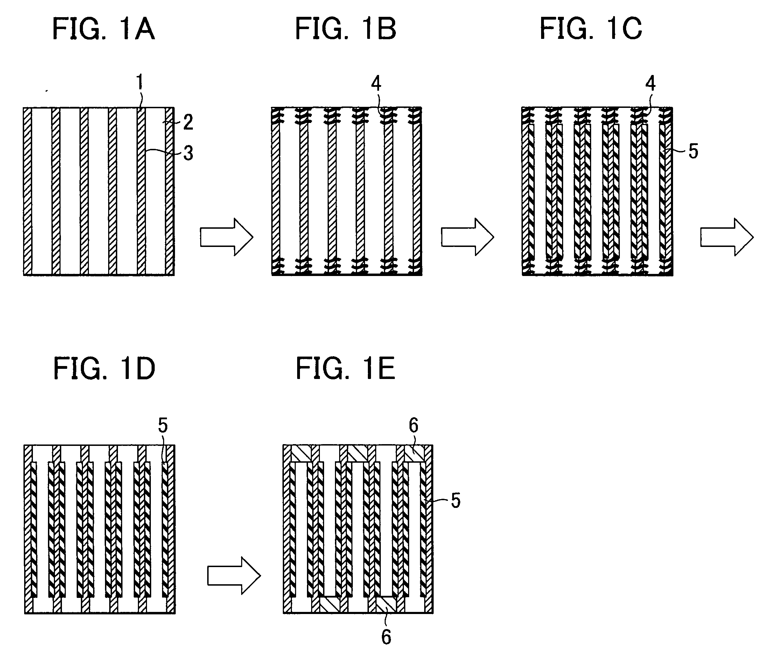

A manufacturing method for a filter according to a first embodiment of the present invention will be described with reference to Figs. 1A to 1E.

First, masks 4 shown in Fig. 1B are applied to the cell openings 2 of a honeycomb structure 1 shown in Fig. 1A so that no catalyst layer is formed on the end portion of each of the cell openings 2. In the honeycomb structure 1, pores, which are gas-permeable, are provided in each cell side-walls 3 so as to allow gas to pass through the side-walls 3. As a material of the honeycomb structure 1, it is desirable to use a material superior in the heat resistance so as to prevent the honeycomb structure 1 from thermally degrading at a temperature of exhaust gas or at a combustion temperature of particulates. The honeycomb structure 1 is preferably made up of a ceramic or a metal. Preferable ceramics may include: cordierite, mullite, alumina, zirconia, silicon nitride, silicon carbide, and so on, the cordierite being more preferable. On the other hand, preferable metals may include: stainless steel, carbon steel, alloy steel, iron, cast iron, copper, copper alloy, aluminum, aluminum alloy, magnesium alloy, nickel alloy, titan, and so on, the stain steel being more preferable. The sectional shape of each cell is not particularly limited. Various shapes, such as a circle, quadrangle, hexagon, and the like may be applicable.

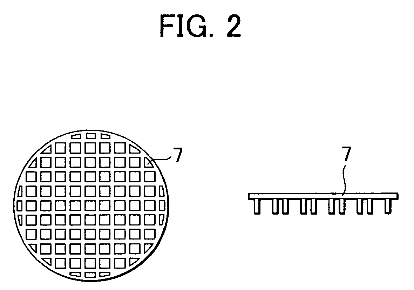

Methods for preparing a mask 4 may include: a method using a jig for mask shown in Fig. 2, a method in which wax is applied to or sprayed on the cell side-walls, or a method in which the honeycomb structure is soaked in liquid wax. Any of these methods can be applied. When wax is to be used, wax such that is burned or decomposed by undergoing heating to thereby disappear, is desirable. In particular, because at the next process, i.e., a catalyst layer forming process, water is used as a solvent in many cases, it is preferable to employ water-insoluble wax. Wax materials usable in the present invention may include the following, which can be used alone or in combinations of two or more of these materials: a) animal waxes such as bee wax, whale wax, and shellac wax; b) plant waxes such as carnauba wax, Japan wax, rice wax, and candelilla wax; c) petroleum-based waxes such as paraffin wax and micro-crystalline wax; d) mineral waxes such as montan wax and ozokerite wax; e) synthetic waxes such as Fischer-Tropsch wax, polyethylene wax, fatty synthetic waxes (ester, ketones, and amide), and hydrogenated wax; f) worked/modified waxes such as oxidized wax, combination wax, modified montan wax; g) greases such as calcium soap-based grease, sodium soap-based grease, lithium soap-based grease, and non-soap based-greases; h) animal/plant oils such as soybean oil and rapeseed oil; and i) petroleum-based and synthetic lubrication oils.

Next, the catalyst layers 5 are formed on the cell side-walls 3, thereby bringing about a state shown in Fig. 1C. The major role of the catalyst layers 5 is to burn and eliminate particulates trapped by the cell side-walls 3. In order to provide the catalyst layers 5 with the function of burning and eliminating, it is desirable to cause the catalyst layers 5 to contain a platinum group element such as platinum, palladium, rhodium, iridium, ruthenium, or the like. The catalyst layer 5 can be formed by various methods such as slurry application, and slurry impregnation as in the case where an exhaust gas purification catalyst is prepared. When the catalyst layers 5 are to be formed, the honeycomb structure 1 may be caused to directly support a platinum group element or a catalyst active component including a platinum group element, but it would be more desirable that firstly cause the honeycomb structure 1 to support an inorganic oxide support, and thereafter to support the catalyst active component. The use of the support allows the fixing strength of the catalyst active component to be enhanced, and the catalyst layers 5 to become resistant to peeling. Here, when the catalyst layers 5 include a platinum group element, an added effect of removing even carbon monoxide (CO) or hydrocarbon (HC) contained in exhaust gas, is produced.

Then, the masks 4 are removed, thereby bringing about a state shown in Fig. 1D. When wax is used as a mask material, in a firing process after having caused the cell side-walls 3 to support such as alumina, or a firing process after having caused the alumina support to support the catalyst active component, no special treatment is needed, because the wax is burnt or decomposed by undergoing heating to thereby disappear. If masks 4 other than wax are used, mask removal work is needed.

Next, both ends of the cell openings 2 is alternately sealed by a sealant 6, thereby bringing about a state shown in Fig. 1E. Possible methods for sealing may include: a method in which, after the sealant in a slurry state has been poured into the cell openings, the sealant is heated and set, a method in which ones formed as lids by machining are stuck to end portions of the cell openings, a method in which the lids are joined to end portions of the cell openings or stuck to them using an adhesive, and a method in which the sealant is press-fitted into the cell openings. The method for sealing is not particularly restricted, and any of the above-described methods can be applied. It is essential only that the sealant and the substrate of the honeycomb structure be stuck to each other. Here, the term "be stuck" refers to a state in which the sealant and the substrate of the honeycomb structure 1 are stuck fast to each other so as not to be easily separated. This state can be attained by adhesion, joining, pressure contact, or the pouring of a sealant in a slurry state and the setting thereof.

It is desirable for the sealant 6 to use a material having the same or substantially the same thermal expansion coefficient as that of the honeycomb structure 1. Thereby, even if the honeycomb structure 1 expands due to heat of exhaust gas or heat occurring when particulates is burnt, because their thermal expansion coefficients are close to each other, it can be prevented that a gap occurs between the sealant 6 and the honeycomb structure 1, thereby inhibiting the reduction in fixing strength. When the honeycomb structure 1 is made up of ceramic, it is desirable for the sealant 6 to use ceramic, and when the honeycomb structure 1 is made up of a metal, it is desirable for the sealant 6 to use a metal of the same kind as that of the sealant 6. The use of a metallic material for a sealant 6 facilitates its machining and makes the sealant 6 highly resistant to shocks. When ceramic, in particular, ceramic such as alumina or silicon carbide, which is in an extensive use as a catalyst support material, is selected as a material of sealant 6, a catalytic function may be imparted to sealant portions in contact with gas by causing the sealant portions to support or contain a catalyst. Also, when lids are to be used, the shape of lid may be one corresponding to one of the cell openings to be sealed, or one corresponding to a plurality of cells openings.

It is advisable that the alignment between the sealant 6 and the cell openings 2 be performed by using image processing visually recognizing the locations of cells. Here, possible methods for fixing the lid may include: a method in which the lid and each of the end faces of the honeycomb structure is mutually stuck or they are brought into pressure contact; a method in which there are provided protrusions for inserting the cell openings into the lid, and in which these protrusions are stuck to the honeycomb structure 1 or they are brought into press contact; and a method in which a cover such that wraps the outer periphery of the honeycomb structure is provided to the lid, and in which, in this cover portion, the lid and the honeycomb structure 1 are stuck to each other or they are brought into pressure contact.

A filter formed by sticking a sealant 6 made of alumina to the cell openings 2 of the honeycomb structure 1 made of cordierite was manufactured in the manufacturing process shown in Figs. 1A to 1E. Paraffin wax was used for masks 4, and was applied to the cell openings 2 from each the end portion thereof up to a depth of 5 to 7 mm. In a forming process for catalyst layer, firstly, the honeycomb structure 1 was coated with a predetermined amount of alumina slurry comprising γ-alumina, nitric acid, an alumina precursor, and purified water, and fired at a temperature of 600°C. Next, the honeycomb structure 1 was impregnated with a dinitro-diammine platinum solution, dinitro-diammine palladium solution, or the like, and fired at a temperature of 600°C. Thereafter, the honeycomb structure 1 was further impregnated with a solution containing sodium and potassium as the main ingredients, and fired at a temperature of 600°C. The purpose for causing the honeycomb structure 1 to support sodium and potassium is to remove nitrogen oxide (NOx) in diesel exhaust gas, taking advantage of their NOx-trapping actions because the alkali metal has an NOx-trapping action. The sealing work was performed by, using alumina as a sealant material, filling alumina in a slurry state into the cell openings 2, then blowing hot air into the cell openings 2 to dry the alumina, and thereafter heating and setting the alumina. By the foregoing process, the sealant was brought into direct contact with the substrate of the honeycomb structure 1, and was stuck thereto. Thus, a filter of which sealing portions have no catalyst layer 5 thereon was manufactured.

Fig. 2 shows a plan view and front view of a jig 7 for mask as a substitute of wax. The mask 4 can be applied to the cell side-walls 3 by pushing the jig 7 for mask shown in Fig. 2, into the honeycomb structure 1 from each of the end faces thereof. The jig 7 for mask has an advantage of allowing reuse.

### Second Embodiment

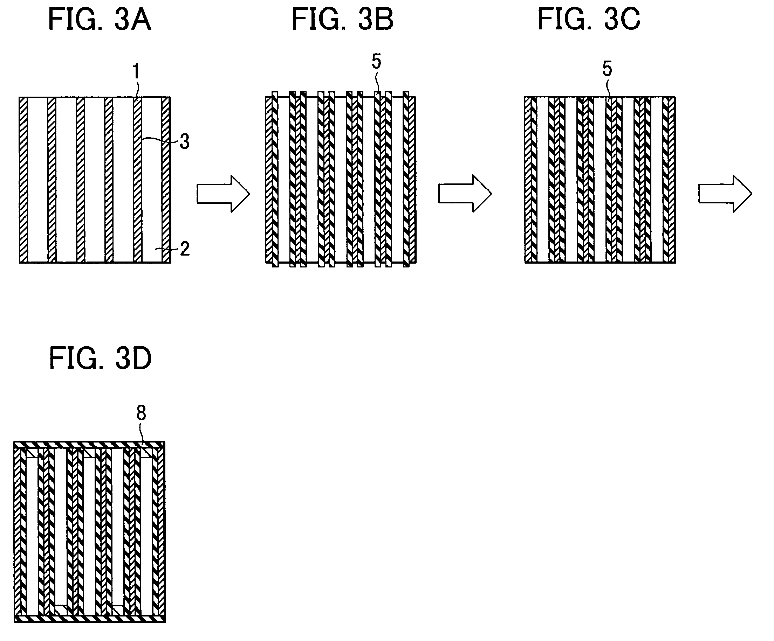

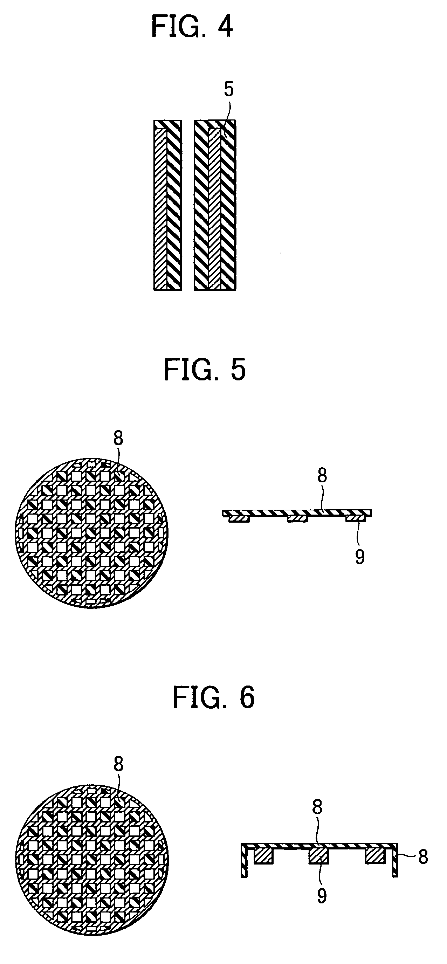

A manufacturing method for a filter according to a second embodiment of the present invention will be described with reference to Figs. 3A to 3D, Fig. 4, and Fig. 5. According to this method, the catalyst layer 5 is formed over the entire surface of each of the cell side-walls 3 of the honeycomb structure 1 shown in Fig. 3A, thereby bringing about a state shown in Fig. 3B. Here, when the formation of the catalyst layers 5 is performed by a method in which the honeycomb structure 1 is impregnated with a solution containing catalyst components, the catalyst layers 5 is also formed on the end faces of the honeycomb structure 1 as shown in an enlarged view in Fig. 4. Accordingly, the catalyst layers 5 existing on the end faces are removed using a file or the like to smooth the end faces, and simultaneously, the substrate of the honeycomb structure 1 is exposed on the end faces thereof, thereby bringing about a state shown in Fig. 3C. Here, the substrate of the honeycomb structure 1 may be exposed by cutting or grinding instead of using the file. Thereafter, the lids 8 are abutted against the end faces of the honeycomb structure 1 to mutually stick the lids 8 and the substrate of the honeycomb structure 1, thereby bringing about a state shown in Fig. 3D. In this embodiment, the lids 8 having protrusions 9 at the sealing portions as shown in Fig. 5 is used, thereby facilitating the alignment between the lids 8 and the cell openings 2. Here, it is recommendable that the width of the protrusion 9 is substantially the same as the width of the cell after the catalyst layer 5 has been formed on its side-wall 3 so that the catalyst layer 5 formed on the cell side-wall 3 is not peeled by the insertion of the lid 8.

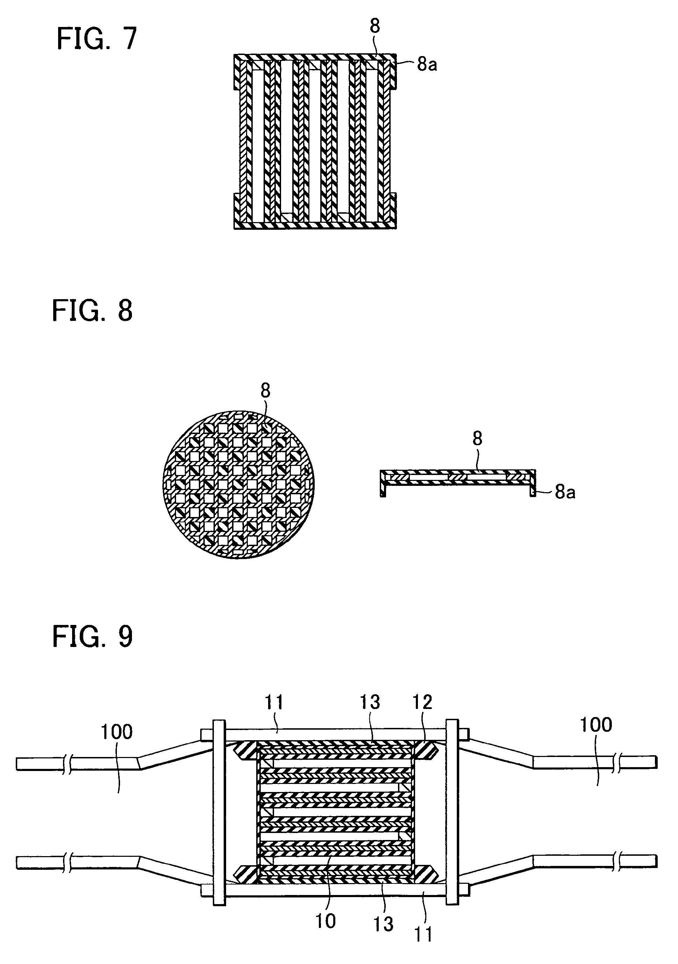

Fig. 6 shows another example of lid. Here, Fig. 6 is a plan view and front view thereof, respectively. This lid 8 has covers 8a formed so as to wrap the end portion of the honeycomb structure 1. Fig. 7 shows a state in which the lids 8 are mounted on the honeycomb structure 1. Providing the lids 8 with the covers 8a so as to wrap the end portions of the honeycomb structure 1 in this manner, prevents the lids 8 from moving in the lateral direction, thereby further facilitating the mounting of the lids 8. When providing the lids 8 with the covers 8a, lids without protrusions 9 can be also used as shown in Fig. 8 as a still another example of lid. Here, Fig. 8 shows a plan view and front view of this other example of lid.

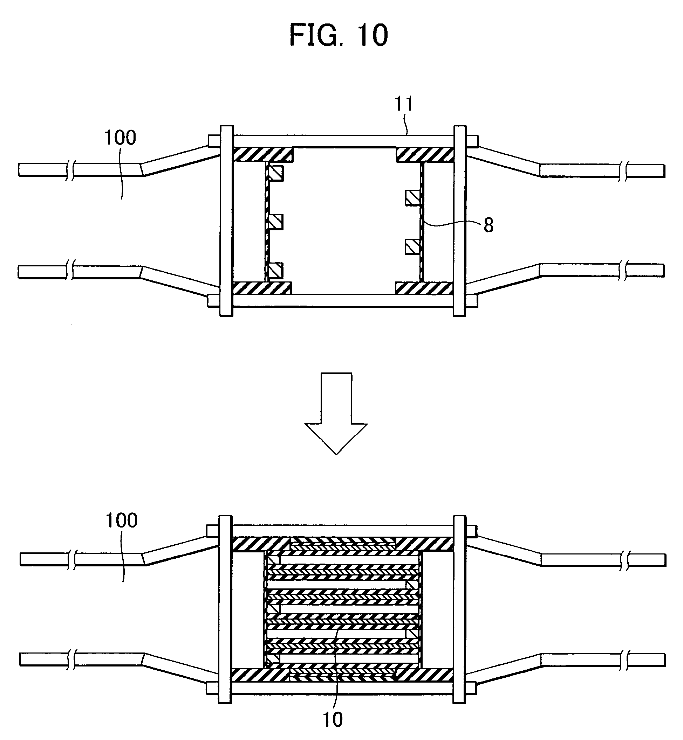

Next, a description will be made of the case where a filter is installed in an exhaust flow path of a diesel engine. Fig. 9 is a schematic view showing a state in which a filter 10 manufactured using the lids 8 shown in Figs. 5A and 5B is installed in one portion of the exhaust flow path 100 of a diesel engine. Here, a canning storing a filter 10 is installed in an exhaust gas flow path 100. As shown in Fig. 9, stoppers 12 are provided on both sides of lids 8 so as to fix the lids 8 more securely. Also, mats 13 are provided around the filter 10 so that the position of the filter 10 does not deviate from the original position. When using lids having covers 8a shown in Figs. 6A and 6B, or Figs. 8A and 8B, it is also possible to mount the lids in advance as one portion of an exhaust tube during canning, and thereafter mount the filter, as shown in Fig. 10.

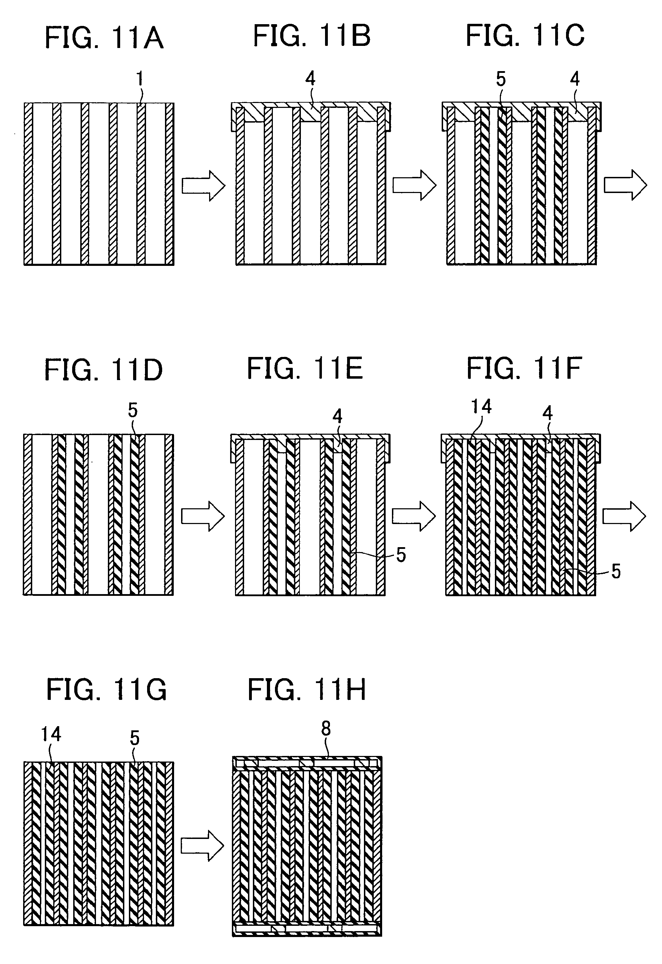

A manufacturing method for a filter according to a third embodiment of the present invention will be described with reference to Fig. 11. According to this method, firstly, masks having a shape like the lid 8 shown in Fig. 6 are made of wax, and they are mounted on one end of the honeycomb structure 1 shown in Fig. 11A, thereby bringing about a state shown in Fig. 11B. Next, using a method in which the honeycomb structure 1 is soaked in slurry containing a material of the catalyst layers 5, the catalyst layers 5 are formed on the cell side-walls 3 on the sides where no mask of solidified wax has been applied, thereby bringing about a state shown in Fig. 11C. Then, firing is performed, and the honeycomb structure 1 is caused to support the catalyst layers 5, as well as the solidified wax is caused to disappear, thereby bringing about a state shown in Fig. 11D. Next, solidified wax is mounted on the cell side-walls 3 on the sides where the catalyst layers 5 has been formed, to apply masks 4 thereto, in the same manner as the foregoing, thereby bringing about a state shown in Fig. 11E. Then, catalyst layers 14 are formed on the other surface sides of the cell side-walls 3, thereby bringing about a state shown in Fig. 11F. Thereafter, firing is performed, and the solidified wax is caused to disappear, thereby bringing about a state shown in Fig. 11G. Lastly, sealing is performed, thereby bringing about a state shown in Fig. 11H. In Fig. 11, the case where sealing is performed by using lids 8 similar to the one shown in Fig. 8 is illustrated. On the end faces of the honeycomb structure 1, the substrate of the honeycomb structure 1 is exposed, as well as each of the end faces of the honeycomb structure 1 is a smooth surface, and therefore, the fixing strength of the lid is high. This embodiment is particularly suitable for the case where the compositions of the catalyst layer 5 and catalyst layer 14 are intended to be differentiated from each other.

A filter in which the compositions of the catalyst layer 5 and catalyst layer 14 were differentiated from each other, was manufactured by the above-described manufacturing process. The catalyst layer 5 was formed by coating the honeycomb structure 1 with a predetermined amount of a mixture between alumina slurry comprising γ-alumina, nitric acid, an alumina precursor, and purified water; and dinitro-diammine platinum solution and dinitro-diammine palladium solution, and then firing it. The catalyst layer 14 has a composition obtained by adding an alkali metal composed of sodium and potassium to the components of the catalyst layers 5.

The method according to this embodiment is suitable for not only the case where the catalyst components are differentiated between the catalyst layer 5 and catalyst layer 14, but also for the case where the support amounts of the catalyst components are differentiated between them. When attempting to manufacture the filter in which the support amounts of the catalyst components of the catalyst layer 5 and catalyst layer 14 have been differentiated, for example, a catalyst support slurry such as alumina is poured into the cell openings 2 to form support layers, and then the cell openings 2 is impregnated with a slurry containing the catalyst components. At this time, the alumina support amount when the catalyst layers 5 are formed and that when the catalyst layers 14 are formed, are differentiated from each other. In the impregnation method, the catalyst components are supported by a catalyst support, and therefore, if the coating amount of the support is different between the front and back sides of the cell side-wall 3, the catalyst component support amount is also different between the front and back sides of the cell side-wall 3.

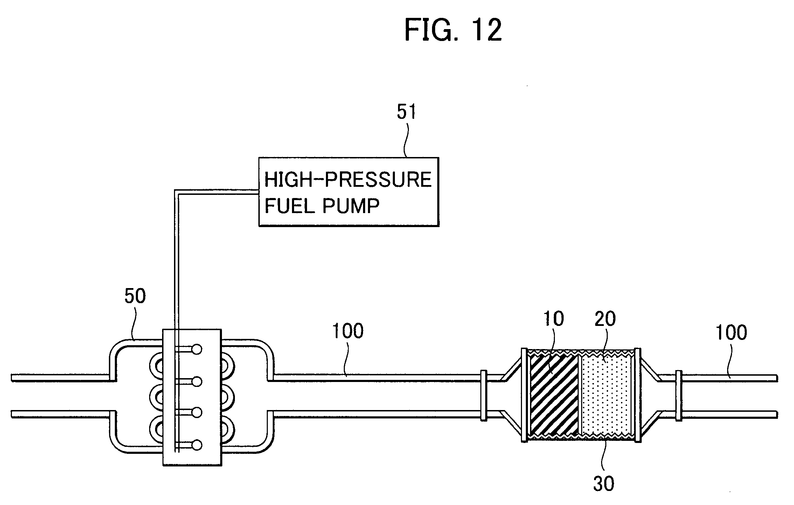

Next, the exhaust gas purification apparatus according to the present invention will be described below. Fig. 12 shows a state in which the filter 10 and an exhaust gas purification catalyst 20 are arranged in the exhaust gas flow path 100 of a diesel engine 50. With respect to the flow direction of exhaust gas, the filter 10 is provided on the upstream side, and the exhaust gas purification catalyst 20 is provided on the downstream side. According to Fig. 12, the filter 10 and exhaust gas purification catalyst 20 are accommodated into a case 30 made of a good thermal conductor, and set in the exhaust gas flow path 100 as a whole so that both can be installed by one-time working. Installing the filter 10 on the upstream side in the exhaust gas flow direction in this manner, allows the exhaust gas after particulates therein has been removed, to flow toward the exhaust gas purification catalyst 20, thereby inhibiting the clogging of the exhaust gas purification catalyst 20 due to particulates. For the exhaust gas purification catalyst 20, various catalysts can be used depending on purpose for using. For example, when attempting to enhance the purification capability with respect to HC or CO, it is advisable that an HC-adsorption catalyst such as a three-way catalyst, combustion catalyst, or silver-mordenite be installed. In the case where a lean NOx catalyst is installed as the exhaust gas purification catalyst 20, if the NOx-trapping amount increases and hence the trapping capability thereof decreases, it is desirable, for example, to once adjust the fuel supply amount by a high-pressure fuel pump 51 to bring gas in the exhaust flow path 100 into a stoichiometric air fuel ratio or an excessive fuel atmosphere, and thereby to reduce NOx. The time period for which the excessive fuel atmosphere is to be maintained has only to be several seconds to several tens of seconds, and hence it has little effect on fuel economy. In the exhaust gas purification apparatus with the arrangements shown in Fig. 12, having the filter 10 according to the present invention, the sealing portions in the filter 10 has a high fixing strength, and therefore, even if they are subjected to shocks, the sealing portions are highly resistant to falling-off. This inhibits, for a long term, particulates from being emitted toward the downstream side, thereby producing the effect of allowing the capability of the exhaust gas purification catalyst 20 to be exerted for a long term.

As described above, the exhaust gas purification filter according to the present invention is extremely suitable for use as a filter for trapping particulates from a diesel internal combustion engine.

## Claims

1. An exhaust gas purification filter for a diesel internal combustion engine, said filter (10) comprising:
a honeycomb structure (1) having a large number of cells with both ends thereof opened, openings (2) of said cells being alternately sealed so as to allow exhaust gas to pass through side-walls (3) of said cells and flow into adjacent cells; and
a catalyst layer (5) provided on each of said cell side-walls (3),
wherein sealing of said cell openings (2) is performed to portions to which a substrate of said honeycomb structure (1) is exposed.

2. The exhaust gas purification filter for a diesel internal combustion engine according to Claim 1, said filter further comprising:
regions to which the substrate of said honeycomb structure (1) is exposed and which have no catalyst layer thereon, regions being located in the vicinity of end portions of said cell openings (2),
wherein said sealing is performed to said regions.

3. The exhaust gas purification filter for a diesel internal combustion engine according to Claim 1 or 2, said filter further comprising:
regions to which said substrate of said honeycomb structure (1) is exposed and which have no catalyst layer thereon, said regions being located on each of end faces of the honeycomb structure (1),
wherein said sealing is performed to said regions.

4. The exhaust gas purification filter for a diesel internal combustion engine according to at least one of Claims 1 to 3, wherein a sealant (6) and said substrate of the honeycomb structure (1) is stuck to each other in said regions.

5. The exhaust gas purification filter for a diesel internal combustion engine according to at least one of Claims 1 to 4,
wherein each of said end faces of the honeycomb structure (1) is covered with a lid (8) for sealing; and
wherein said substrate of the honeycomb structure (1) exposed on each of said end faces and said lids (8) are mutually stuck.

6. A method for manufacturing an exhaust gas purification filter for a diesel internal combustion engine, said method comprising the steps of:
alternately sealing both ends of cell openings (2) in a honeycomb structure (1) having a large number of cells with both ends thereof opened;
forming a catalyst layer (5) on each of said cell side-walls (3);
in the vicinity of end portions of said cell openings (2), forming regions in which a substrate of the honeycomb structure (1) is exposed; and
applying sealing to said regions.

7. The method for manufacturing an exhaust gas purification filter for a diesel internal combustion engine according to Claim 6, said method further comprising:
a step of applying a mask (4) to each of said regions to which the substrate of said honeycomb structure (1) is to be exposed when forming said catalyst layer (5).

8. The method for manufacturing an exhaust gas purification filter for a diesel internal combustion engine according to Claim 6 or 7, said method further comprising the steps of:
in the vicinity of end portions of said cell openings (2), forming regions to which said substrate of said honeycomb structure (1) is exposed, without forming any catalyst layer (5); and
filling said regions with a sealant in a slurry state and setting said sealant (6).

9. The method for manufacturing an exhaust gas purification filter for a diesel internal combustion engine according to at least one of Claims 6 to 8, said method further comprising the steps of:
in the vicinity of end portions of said cell openings (2), forming regions to which said substrate of said honeycomb structure (1) is exposed, without forming any catalyst layer (5); and
press-fitting a solid sealant to said regions.

10. The method for manufacturing an exhaust gas purification filter for a diesel internal combustion engine according to at least one of Claims 6 to 9, said method further comprising the steps of:
on each of end faces of said honeycomb structure (1), forming regions to which said substrate of said honeycomb structure (1) is exposed; and
covering each of end faces with a lid (8) for sealing, and thereby mutually sticking said substrate and each of said lids (8).

11. An exhaust gas purification apparatus for a diesel internal combustion engine, said apparatus comprising:
a filter (10) installed in an exhaust gas flow path (100)of said diesel internal combustion engine (50), said filter (10) including:
a honeycomb structure (1) having a large number of cells with both ends thereof opened, openings (2) of said cells being alternately sealed; and
a catalyst layer provided on each of cell side-walls (3),
wherein sealing of said cell openings (2) in said filter (10) is performed to portions to which a substrate of said honeycomb structure (1) is exposed.

12. The exhaust gas purification apparatus for a diesel internal combustion engine according to Claim 11, said apparatus further comprising:
regions to which said substrate of said honeycomb structure (1) is exposed and which have no catalyst layer thereon, said regions being located in the vicinity of end portions of said cell openings (2),
wherein the sealing is performed to said regions.

13. The exhaust gas purification apparatus for a diesel internal combustion engine according to Claim 11 or 12, said apparatus further comprising:
regions to which said substrate of said honeycomb structure is exposed and which have no catalyst layer thereon, said regions being located on each of end faces of said honeycomb structure (1),
wherein said sealing is performed to said regions.

14. The exhaust gas purification apparatus for a diesel internal combustion engine according to at least one of Claims 11 to 13, said apparatus further comprising:
an exhaust gas purification catalyst (20) installed downstream of said filter (10) in said exhaust gas flow path (100).

15. The exhaust gas purification apparatus for a diesel internal combustion engine according to at least one of Claims 11 to 14,
wherein said exhaust gas purification catalyst (20) comprises a lean NOx catalyst for trapping NOx in diesel exhaust gas and thereafter reducing said trapped NOx.
